# EUROPÄISCHE PATENTANMELDUNG

(11) **EP 3 878 781 A1**
(43) Veröffentlichungstag der Anmeldung: **15.09.2021**
(21) Anmeldenummer: 21161556.2
(22) Anmeldetag: 09.03.2021
(51) Int. Cl.: B65G 57/03

(54) **VERFAHREN ZUM BETRIEB EINER PALETTIERANLAGE UND PALETTIERANLAGE**

(30) Priorität: 10.03.2020 DE 102020106424; 02.02.2021 US 202163144757 P; 03.02.2021 US 202163145152 P
(71) Anmelder: Körber Supply Chain Automation Eisenberg GmbH, 67304 Eisenberg (DE)
(72) Erfinder: Blasius, Christopher, 67725 Börrstadt (DE)
(74) Vertreter: Hörschler, Wolfram Johannes

(57) **Zusammenfassung**

Die Erfindung betrifft ein Verfahren zum Betrieb einer Palettieranlage (5), welche eine Palettiervorrichtung (10) zur Bildung eines Lagenstapels (100) und mindestens ein fahrerloses Transportfahrzeug (40) zum Transportieren des Lagenstapels (100) umfasst, wobei das fahrerlose Transportfahrzeug (40) zu einem Palettierplatz (41) nahe der Palettiervorrichtung (10) bewegt wird, und ein Lagenstapel (100) auf dem fahrerlosen Transportfahrzeug (40) gebildet wird, dadurch gekennzeichnet, dass das fahrerlose Transportfahrzeug (40) während der Bildung des Lagenstapels (100) auf dem Palettierplatz (41) verbleibt, wobei ein Energiespeicher während des Aufenthalts des fahrerlosen Transportfahrzeugs (40) auf dem Palettierplatz (41) geladen wird und das fahrerlose Transportfahrzeug (40) nach Bildung des Lagenstapels (100) von dem Palettierplatz (41) weg zu einem Entnahmeplatz (42) bewegt wird und an diesem der Lagenstapel (100) von dem fahrerlosen Transportfahrzeug (40) entnommen wird, oder mit einem Transporthilfsmittel (105) von dem fahrerlosen Transportfahrzeug (40) entnommen wird, wobei mehrere Lagenstapel (100) auf mehreren fahrerlosen Transportfahrzeugen (40) gleichzeitig gebildet werden, indem zunächst nur eine oder wenige Lagen auf einem ersten Transportfahrzeug (40) abgelegt werden, dann das erste Transportfahrzeug (40) in einen Warteplatz (43) bewegt wird, ein weiteres Transportfahrzeug (40) zum Palettierplatz (41) bewegt wird, eine oder wenige Lagen auf dem weiteren Fahrzeug (40) abgelegt werden, bis einer der Lagenstapel (100) eine gewünschte Höhe erreicht hat.

## Beschreibung

Die Erfindung betrifft ein Verfahren zum Betrieb einer Palettieranlage, welches eine Palettiervorrichtung zur Bildung eines Lagenstapels und mindestens ein fahrerloses Transportfahrzeug zum Transportieren des Lagenstapels umfasst, wobei das fahrerlose Transportfahrzeug zu einem Palettierplatz nahe der Palettiervorrichtung bewegt wird, und ein Lagenstapel auf dem fahrerlosen Transportfahrzeug gebildet wird. Die Erfindung betrifft auch eine Palettieranlage zur Ausführung des erfindungsgemäßen Verfahrens.

### Stand der Technik

Eine gattungsgemäße und durch Benutzung bekannte Palettieranlage umfasst eine Palettiervorrichtung und mehrere fahrerlose Transportfahrzeuge. Mittels einer solchen Palettieranlage können einzelne Artikel palettiert und zum weiteren Transport, beispielsweise mittels eines Lastkraftwagens, zusammengefasst und bereitgestellt werden.

Die Palettiervorrichtung dient dazu, Artikel, insbesondere Stückgüter oder Gebinde zum Transport auf Transporthilfsmitteln, insbesondere Paletten, anzuordnen. Dazu werden die Artikel beispielsweise zunächst zu einzelnen Artikellagen zusammengefasst und dann lagenweise zur Bildung eines Lagenstapels auf dem Transporthilfsmittel abgesetzt. Dabei wird zunächst eine erste Artikellage eines Lagenstapels direkt auf das Transporthilfsmittel abgesetzt, und anschließend werden weitere Artikellagen auf die erste Artikellage und die weiteren Artikellagen abgesetzt.

Palettiervorrichtungen sowie Verfahren zur Palettierung von Artikellagen sind beispielsweise aus den Dokumenten DE 199 43 800 A1, DE 10 2015 206 124 A1, DE 10 2014 223 319 A1, EP 2 610 197 A1, EP 2 881 347 B1, DE 10 2011 088 849 A1 und EP 2 547 612 B1 bekannt.

Die fahrerlosen Transportfahrzeuge dienen dazu, leere Transporthilfsmittel zu einem Palettierplatz nahe der Palettiervorrichtung zu bringen und anschließend die Transporthilfsmittel mit den darauf befindlichen Lagenstapeln von dem Palettierplatz weg, beispielsweise zu einem Entnahmeplatz, zu bringen, und dort zum weiteren Transport bereitzustellen.

Das Dokument DE 10 2006 057 758 B4 offenbart ein Verfahren und eine Vorrichtung zum Kommissionieren von Waren. Dabei wird zunächst ein autarkes, fahrerloses Transportfahrzeug mit Produkten beladen. Das beladene Transportfahrzeug fährt dann zu einer Palettierstation mit einem Palettierroboter. Der Palettierroboter entnimmt die Waren von dem Transportfahrzeug und stellt die Waren auf einer Transportpalette ab.

Das Dokument DE 10 2012 203 575 A1 offenbart ein fahrerloses Transportsystem einer Verpackungsanlage und ein Verfahren zu deren Steuerung. Das fahrerlose Transportsystem umfasst dabei mehrere Transportfahrzeuge zum Transport von Paletten. Ein solches Transportfahrzeug bringt jeweils eine leere Palette zu einem Palettierer und bringt eine volle Palette von dem Palettierer weg.

Das Dokument DE 601 111 19 T2 offenbart eine Palettierinstallation mit einer Vorrichtung zum Bilden einer Reihe von Produkten. Dabei kann eine Palette, auf welcher Schichten von Produkten abgelegt werden, durch ein automatisch geführtes Vehikel (AGV) transportiert werden.

Zunehmend wird auch eine palettenlose Verpackung eingesetzt. Dabei werden die Lagenstapel zum Transport entweder auf einem sogenannten Slip Sheet oder komplett ohne Transporthilfsmittel gebildet. Dadurch lässt sich die Ladekapazität von Lagern und Lastkraftwagen erhöhen und der Ressourceneinsatz für Ladehilfsmittel wird reduziert. Innerhalb der Palettierung kommen in diesem Fall teilweise Palettierhilfsmittel zum Einsatz, die die Palettierung vereinfachen. Die Lagenstapel werden nach der Palettierung wieder von diesem Palettierhilfsmittel entnommen. Das Palettierhilfsmittel kann entweder wie das Transporthilfsmittel lösbar mit dem fahrerlosen Transportsystem verbunden oder Bestandteil desselben sein.

### Aufgabe

Aufgabe der vorliegenden Erfindung ist es, eine Palettieranlage der eingangs genannten Art sowie ein Verfahren zum Betrieb einer solchen Palettieranlage zu verbessern. Insbesondere ist es Aufgabe der Erfindung, den Automatisierungsgrad sowie die Flexibilität einer solchen Palettieranlage zu erhöhen, den erforderlichen Platzbedarf zu verringern und die Geschwindigkeit beim Palettieren zu erhöhen.

### Lösung

Diese Aufgabe wird durch ein Verfahren zum Betrieb einer Palettieranlage mit den Merkmalen des Anspruchs 1 gelöst. Vorteilhafte Ausgestaltungen und Weiterbildungen der Erfindung sind Gegenstand der Unteransprüche. Die Aufgabe wird auch durch eine Palettiervorrichtung mit den Merkmalen des Anspruchs 9 gelöst. Vorteilhafte Ausgestaltungen und Weiterbildungen der Erfindung sind Gegenstand der Unteransprüche.

Eine gattungsgemäße Palettieranlage umfasst eine Palettiervorrichtung zur Bildung eines Lagenstapels und mindestens ein fahrerloses Transportfahrzeug zum Transportieren des Lagenstapels. Gemäß einem gattungsgemäßen Verfahren zum Betrieb einer solchen Palettieranlage wird das fahrerlose Transportfahrzeug zunächst zu einem Palettierplatz nahe der Palettiervorrichtung bewegt. Dort wird ein Lagenstapel auf dem fahrerlosen Transportfahrzeug gebildet. Der Palettierplatz befindet sich derart nahe bei der Palettiervorrichtung, dass die Palettiervorrichtung zur Bildung des Lagenstapels Artikellagen auf dem fahrerlosen Transportfahrzeug absetzen kann.

Durch den Einsatz von fahrerlosen Transportfahrzeugen wird der Automatisierungsgrad sowie die Flexibilität der Palettieranlage signifikant erhöht. Förderer zum Transport von Transporthilfsmitteln zu dem Palettierplatz, welche einen verhältnismäßig hohen Platzbedarf haben, sind nicht erforderlich. Auch Anpassungen an verschiedene Arten von Transporthilfsmitteln oder zusätzliche Palettierplätze sind einfach durchführbar. Insbesondere können verschieden ausgestaltete Transporthilfsmittel, beispielsweise kundenspezifische Paletten mit unterschiedlichen Abmessungen, von fahrerlosen Transportfahrzeugen einfach aufgenommen und transportiert werden.

Ein fahrerloses Transportfahrzeug kann beliebig viele verschiedene Palettierplätze anfahren und ist dabei nicht an bestimmte Wegstrecken gebunden. Ein fahrerloses Transportfahrzeug kann einen Palettierplatz aus verschiedenen Richtungen anfahren, bei Bedarf auf dem Palettierplatz drehen und in verschiedene Richtungen von dem Palettierplatz wegfahren.

Erfindungsgemäß verbleibt das fahrerlose Transportfahrzeug während der Bildung des Lagenstapels auf dem Palettierplatz nahe der Palettiervorrichtung. Der Lagenstapel wird also auf dem fahrerlosen Transportfahrzeug abgesetzt. Das fahrerlose Transportfahrzeug verlässt den Palettierplatz erst, wenn der Lagenstapel vollständig gebildet ist.

Dadurch, dass das fahrerlose Transportfahrzeug während der Bildung des Lagenstapels auf dem Palettierplatz verbleibt, sind kein Absetzen eines leeren Transporthilfsmittels und auch kein erneutes Aufnehmen des Transporthilfsmittels mit dem darauf gebildeten Lagenstapel erforderlich. Die Palettiervorrichtung kann, zumindest annähernd, kontinuierlich weiterarbeiten. Eine Wartezeit während des Auswechselns von Transporthilfsmitteln ist nicht erforderlich oder wird auf ein Minimum verkürzt. Die Geschwindigkeit beim Betrieb einer Palettieranlage wird dadurch vorteilhaft erhöht.

Gemäß einer vorteilhaften Ausgestaltung der Erfindung ist auf dem fahrerlosen Transportfahrzeug ein Transporthilfsmittel angeordnet. Der Lagenstapel wird dabei auf dem Transporthilfsmittel gebildet, welches sich auf dem fahrerlosen Transportfahrzeug befindet. Der Lagenstapel wird somit unter Zwischenlage des Transporthilfsmittels auf dem fahrerlosen Transportfahrzeug gebildet.

Das Transporthilfsmittel kann, wenn sich das fahrerlose Transportfahrzeug auf dem Palettierplatz befindet, zentriert und/oder ausgerichtet werden, so dass die Palettiervorrichtung Artikellagen auf dem Transporthilfsmittel absetzen kann. Ebenso kann das ganze fahrerlose Transportfahrzeug auf dem Palettierplatz zentriert und/oder ausgerichtet werden, so dass die Palettiervorrichtung Artikellagen auf dem Transporthilfsmittel absetzen kann.

Gemäß einer anderen vorteilhaften Ausgestaltung der Erfindung wird der Lagenstapel unmittelbar auf dem fahrerlosen Transportfahrzeug gebildet. Die Zwischenlage eines Transporthilfsmittels ist somit nicht erforderlich.

Falls ein Slip Sheet verwendet wird, kann dieses direkt am Palettierplatz auf das Transporthilfsmittel oder das leere Transportfahrzeug aufgelegt werden, oder das Transporthilfsmittel oder das Transportfahrzeug kann außerhalb des Palettierplatzes mit einem Slip Sheet bestückt werden, um die Geschwindigkeit des Palettiervorgangs zu erhöhen.

Vorzugsweise wird zur Bildung des Lagenstapels von der Palettiervorrichtung zunächst eine erste Artikellage auf dem fahrerlosen Transportfahrzeug abgesetzt. Diese eine Artikellage bildet bereits einen Lagenstapel. Anschließend wird mindestens eine weitere Artikellage auf die erste Artikellage abgesetzt. Weitere Artikellagen können auf den bereits gebildeten Lagenstapel abgesetzt werden, wodurch der Lagenstapel immer größer und höher wird. Der gebildete Lagenstapel umfasst somit vorzugsweise, aber nicht notwendigerweise, eine Mehrzahl von Artikellagen.

Falls die Leistung der vorgelagerten Maschinen sehr gering ist, kann es zu längeren Stillständen der Palettiervorrichtung kommen. In diesem Fall kann die Auslastung der Anlage dadurch gesteigert werden, dass mehrere fahrerlose Transportfahrzeuge lagenweise beladen werden. Dazu wird zunächst ein Fahrzeug so lange beladen, wie Artikel verfügbar sind. Anschließend fährt es auf eine Warteposition und ein anderes Fahrzeug wird mit seinen Artikeln beladen, dann das nächste und so weiter bis wieder mindestens eine Lage des ersten Artikels in einem vorgelagerten Speicher vorhanden ist. Dieser Prozess wiederholt sich, bis die gewünschte Palettenhöhe erreicht ist. Die jeweiligen Lagenstapel samt Transporthilfsmittel verbleiben die ganze Zeit auf ihrem Fahrzeug. Dadurch wird die Wechselzeit zwischen zwei Produkten minimiert während gleichzeitig die notwendige Pufferlänge minimiert wird.

Gemäß einer vorteilhaften Ausgestaltung der Erfindung wird ein Energiespeicher des fahrerlosen Transportfahrzeugs geladen, während das fahrerlose Transportfahrzeug sich auf dem Palettierplatz befindet. Der Energiespeicher des fahrerlosen Transportfahrzeugs wird also in der Zeit geladen, in welcher der Lagenstapel gebildet wird, während das fahrerlose Transportfahrzeug sowieso steht. Dadurch wird eine zeitaufwändige Aufladung des Energiespeichers an einem anderen Ort zu einer anderen Zeit vermieden. Dadurch wird die Geschwindigkeit und Leistung beim Betrieb der Palettieranlage weiter erhöht.

Gemäß einer bevorzugten Weiterbildung der Erfindung wird das fahrerlose Transportfahrzeug nach Bildung des Lagenstapels von dem Palettierplatz nahe der Palettiervorrichtung weg und zu einem Entnahmeplatz bewegt. An dem Entnahmeplatz wird dann der Lagenstapel von dem fahrerlosen Transportfahrzeug entnommen und zum weiteren Transport bereitgestellt.

Gemäß einer vorteilhaften Ausgestaltung der Erfindung wird an dem besagten Entnahmeplatz der Lagenstapel gemeinsam mit dem Transporthilfsmittel von dem fahrerlosen Transportfahrzeug entnommen. Das fahrerlose Transportfahrzeug wird in diesem Fall anschließend mit einem anderen, noch leeren Transporthilfsmittel versehen.

Im Falle einer palettenlosen Palettierung kann es vorteilhaft sein, die Lagenstapel auf dem Transportfahrzeug auf einem Palettierhilfsmittel zu bilden, das ähnlich dem besagten Transporthilfsmittel (Palette) ausgeführt ist. Dadurch benötigt das Transportfahrzeug nur eine Aufnahme für beide Anwendungsfälle. An besagtem Entnahmeplatz wird der Lagenstapel, gegebenenfalls samt Slip Sheet, von dem Palettierhilfsmittel entnommen. Das Palettierhilfsmittel verbleibt in diesem Fall auf dem Transportfahrzeug.

Gemäß einer vorteilhaften Weiterbildung der Erfindung wird, nachdem das fahrerlose Transportfahrzeug von dem Palettierplatz weg bewegt wird, ein weiteres fahrerloses Transportfahrzeug von einem Warteplatz zu dem Palettierplatz bewegt. Der Warteplatz befindet sich bevorzugt in unmittelbarer Nähe des Palettierplatzes, so dass das weitere fahrerlose Transportfahrzeug in kurzer Zeit zu dem Palettierplatz gelangen kann. Anschließend wird ein weiterer Lagenstapel auf dem weiteren fahrerlosen Transportfahrzeug gebildet. Dadurch wird die Geschwindigkeit beim Betrieb einer Palettieranlage weiter erhöht.

Gemäß einer vorteilhaften Ausgestaltung der Erfindung wird ein Energiespeicher des weiteren fahrerlosen Transportfahrzeugs geladen, während das weitere fahrerlose Transportfahrzeug sich auf dem Warteplatz befindet. Der Energiespeicher des weiteren fahrerlosen Transportfahrzeugs wird also geladen, während das fahrerlose Transportfahrzeug wartet und daher sowieso steht. Auch dadurch wird eine zeitaufwändige Aufladung des Energiespeichers an einem anderen Ort zu einer anderen Zeit vermieden. Dadurch wird die Geschwindigkeit beim Betrieb der Palettieranlage weiter erhöht.

Eine gattungsgemäße Palettieranlage umfasst, wie bereits erwähnt, eine Palettiervorrichtung zur Bildung eines Lagenstapels und mindestens ein fahrerloses Transportfahrzeug zum Transportieren des Lagenstapels.

Dabei ist die erfindungsgemäße Palettieranlage zur Ausführung des erfindungsgemäßen Verfahrens eingerichtet. Im Betrieb der Palettieranlage wird also das fahrerlose Transportfahrzeug, üblicherweise mit einem Transporthilfsmittel, zunächst zu einem Palettierplatz nahe der Palettiervorrichtung bewegt, und dort wird ein Lagenstapel auf dem fahrerlosen Transportfahrzeug gebildet. Dabei verbleibt das fahrerlose Transportfahrzeug, gegebenenfalls mit dem Transporthilfsmittel, während der Bildung des Lagenstapels auf dem Palettierplatz, und der Lagenstapel wird auf dem fahrerlosen Transportfahrzeug abgesetzt. Das fahrerlose Transportfahrzeug verlässt den Palettierplatz erst, wenn der Lagenstapel vollständig gebildet ist.

Gemäß einer vorteilhaften Ausgestaltung der Erfindung ist also nahe der Palettiervorrichtung ein Palettierplatz vorgesehen, an welchem die Bildung des Lagenstapels erfolgt. Dabei ist an dem Palettierplatz eine Einrichtung zum Laden eines Energiespeichers des fahrerlosen Transportfahrzeugs, insbesondere in Form eines Ladegeräts mit einer entsprechenden Energieübertragungseinrichtung, vorgesehen. Bei der Energieübertragungseinrichtung kann es sich beispielsweise um eine Steckverbindung oder um ein berührungsloses induktives System handeln.

Der besagte Palettierplatz befindet sich dabei derart nahe bei der Palettiervorrichtung, dass die Palettiervorrichtung zur Bildung des Lagenstapels Artikellagen auf dem fahrerlosen Transportfahrzeug absetzen kann.

Gemäß einer vorteilhaften Ausgestaltung der Erfindung ist ferner auch ein Warteplatz vorgesehen, an welchem ein weiteres fahrerloses Transportfahrzeug, gegebenenfalls mit einem Transporthilfsmittel, warten kann. Dabei ist an dem Warteplatz eine Einrichtung zum Laden eines Energiespeichers des fahrerlosen Transportfahrzeugs, insbesondere in Form eines Ladegeräts mit einer entsprechenden Energieübertragungseinrichtung, vorgesehen. Bei der Energieübertragungseinrichtung kann es sich beispielsweise um eine Steckverbindung oder um ein berührungsloses induktives System handeln.

Der besagte Warteplatz befindet sich bevorzugt in unmittelbarer Nähe des Palettierplatzes, so dass das weitere fahrerlose Transportfahrzeug in kurzer Zeit zu dem Palettierplatz gelangen kann.

Vorzugsweise ist auch ein Entnahmeplatz vorgesehen. An dem Entnahmeplatz kann der Lagenstapel von dem fahrerlosen Transportfahrzeug entnommen und zum weiteren Transport, beispielsweise mittels eines Lastkraftwagens, bereitgestellt werden.

Das fahrerlose Transportfahrzeug kann derart ausgestaltet sein, dass ein Transporthilfsmittel oder ein Palettierhilfsmittel auf das fahrerlose Transportfahrzeug aufgesetzt werden kann. Das Transporthilfsmittel, sowie das Palettierhilfsmittel, auf welchem dann der Lagenstapel gebildet wird, sind somit lösbar mit dem fahrerlosen Transportfahrzeug verbunden.

An dem Entnahmeplatz kann dann der Lagenstapel gemeinsam mit dem Transporthilfsmittel von dem fahrerlosen Transportfahrzeug entnommen werden. Das fahrerlose Transportfahrzeug kann anschließend mit einem anderen, noch leeren Transporthilfsmittel versehen werden.

Das fahrerlose Transportfahrzeug kann Lastaufnahmemittel, beispielsweise in Form einer Rollenbahn, aufweisen, auf welche ein Transporthilfsmittel aufgesetzt werden kann.

Das Transporthilfsmittel kann in Form einer Palette ausgestaltet sein. Aber auch andere Ausgestaltungen, beispielsweise als Wellpappe, Holzbrett, Kunststoff-Tray oder Ähnliches sind denkbar.

Das fahrerlose Transportfahrzeug kann auch eine Aufsetzfläche aufweisen, welche selbst als Palettierhilfsmittel dient, und auf welcher der Lagenstapel gebildet wird. In diesem Fall ist das Palettierhilfsmittel unlösbar mit dem fahrerlosen Transportfahrzeug verbunden.

An dem Entnahmeplatz kann dann der Lagenstapel von dem Palettierhilfsmittel entnommen werden. Das Palettierhilfsmittel selbst verbleibt dabei an dem fahrerlosen Transportfahrzeug.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Die Figuren stellen den Gegenstand der Erfindung nur schematisch dar. Es zeigen:
- Figur 1: eine schematische Frontansicht einer Palettieranlage und
- Figur 2: eine Draufsicht auf die Palettieranlage aus Figur 1.

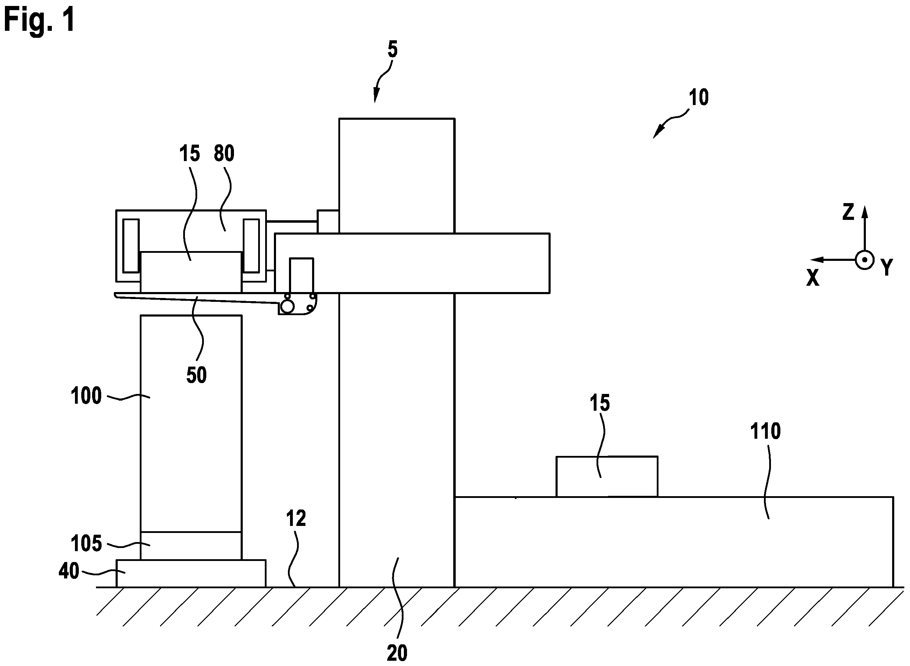

Figur 1 zeigt eine schematische Frontansicht einer Palettieranlage 5. Die Palettieranlage 5 umfasst eine Palettiervorrichtung 10, welche zur Bildung eines Lagenstapels 100 auf einem Transporthilfsmittel 105 dient. Die Palettieranlage 5 umfasst ferner mehrere fahrerlose Transportfahrzeuge 40, wobei in der gezeigten Darstellung nur ein derartiges fahrerloses Transportfahrzeug 40 dargestellt ist. Die fahrerlosen Transportfahrzeuge 40 dienen zum Zuführen der Transporthilfsmittel 105 zu der Palettiervorrichtung 10 und zum Wegbringen von Transporthilfsmitteln 105 mit darauf gebildeten Lagenstapeln 100.

Die Palettiervorrichtung 10 steht auf einem Fußboden 12. Die Palettiervorrichtung 10 umfasst eine Hubvorrichtung 20, welche sich im Wesentlichen in eine Vertikalrichtung Z von dem Fußboden 12 weg erstreckt. Die Hubvorrichtung 20 ist vorliegend in Form einer Säule ausgebildet. Die Vertikalrichtung Z verläuft rechtwinklig zu dem Fußboden 12 und rechtwinklig zu einer Längsrichtung X. Eine Querrichtung Y erstreckt sich rechtwinklig zu der Vertikalrichtung Z und rechtwinklig zu der Längsrichtung X. Die Längsrichtung X und die Querrichtung Y verlaufen somit parallel zu dem Fußboden 12.

Die Palettiervorrichtung 10 umfasst eine Absetzvorrichtung 50, welche an der Hubvorrichtung 20 angeordnet ist. Die Absetzvorrichtung 50 ist in die Vertikalrichtung Z relativ zu der Hubvorrichtung 20 beweglich. Die Absetzvorrichtung 50 ist zusätzlich in die Längsrichtung X zwischen einer ersten Längsposition und einer zweiten Längsposition relativ zu der Hubvorrichtung 20 beweglich. Die Absetzvorrichtung 50 ist vorteilhaft in Form eines Absetzbandes ausgestaltet und umfasst einen umlaufenden Fördergurt, der eine Transportfläche zum Transport einer Artikellage 15 in die Längsrichtung X definiert.

Die Palettiervorrichtung 10 umfasst auch eine Komprimiervorrichtung 80, welche an der Hubvorrichtung 20 angeordnet ist. Die Komprimiervorrichtung 80 ist in die Vertikalrichtung Z relativ zu der Hubvorrichtung 20 beweglich. Die Komprimiervorrichtung 80 dient zum Ausrichten einer Artikellage 15, die sich auf der Transportfläche der Absetzvorrichtung 50 befindet, und/oder zur nachträglichen Ausrichtung des gebildeten Lagenstapels 100.

Die Palettieranlage 5 umfasst ferner eine Zuführvorrichtung 110. Mittels der Zuführvorrichtung 110 werden Artikellagen 15 der Palettiervorrichtung 10 zugeführt. Dabei werden zunächst mehrere einzelne Produkte oder Stückgüter von der Zuführvorrichtung 110 zu einer stapelfähigen Artikellage 15 zusammengefasst, und die so erstellte Artikellage 15 wird anschließend in die Längsrichtung X weiter zu der Palettiervorrichtung 10 transportiert. Es ist auch denkbar, dass eine stapelfähige Artikellage 15 nur ein einzelnes Produkt oder Stückgut enthält.

Zur Bildung eines Lagenstapels 100 auf dem Transporthilfsmittel 105 wird zunächst eine Artikellage 15 von der Zuführvorrichtung 110 an die Absetzvorrichtung 50 übergeben, welche sich dabei in der ersten Längsposition befindet. Anschließend wird die Absetzvorrichtung 50 in die Vertikalrichtung Z auf Höhe des bereits gebildeten Lagenstapels 100 verfahren. Anschließend wird die Absetzvorrichtung 50 in Längsrichtung X in die zweite Längsposition verfahren. Die Komprimiervorrichtung 80 wird darauf in die Vertikalrichtung Z derart abgesenkt, dass die auf der Transportfläche der Absetzvorrichtung 50 befindliche Artikellage 15 sich zwischen Anschlägen der Komprimiervorrichtung 80 befindet. Die hier beschriebene Situation ist in Figur 1 dargestellt.

Auf dem Fußboden 12, in Vertikalrichtung Z unter der Komprimiervorrichtung 80, ist ein Palettierplatz 41 vorgesehen. Auf dem Palettierplatz 41 befindet sich ein fahrerloses Transportfahrzeug 40. Das fahrerlose Transportfahrzeug 40 trägt ein Transporthilfsmittel 105, beispielsweise in Form einer Palette, auf welchem sich bereits ein Lagenstapel 100 befindet. Der Lagenstapel 100 umfasst dabei eine Mehrzahl von übereinander gestapelten Artikellagen 15.

Wenn die Absetzvorrichtung 50 in Längsrichtung X in die erste Längsposition verfahren wird, so wird dadurch die Artikellage 15, welche sich zwischen den Anschlägen der Komprimiervorrichtung 80 befindet, von der Palettiervorrichtung 10 auf dem Lagenstapel 100 abgesetzt. Der Lagenstapel 100, welcher sich auf dem Transporthilfsmittel 105 befindet, umfasst anschließend eine weitere Artikellage 15.

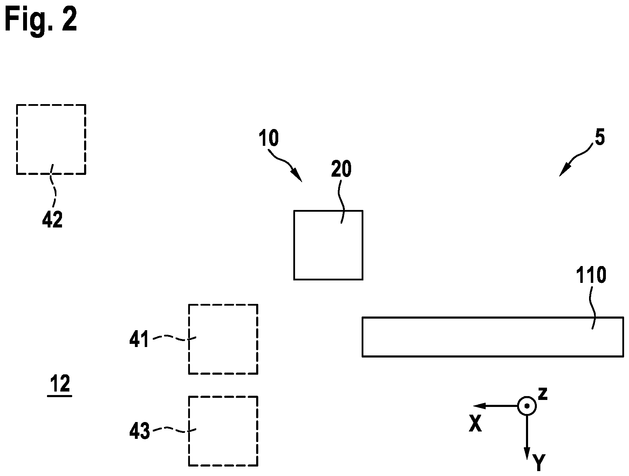

Figur 2 zeigt eine Draufsicht auf die in Figur 1 dargestellte Palettieranlage 5. Dabei sind die Absetzvorrichtung 50 und die Komprimiervorrichtung 80 nicht dargestellt. Auch sind keine Artikellagen 15 dargestellt. Ferner sind kein fahrerloses Transportfahrzeug 40 sowie kein Transporthilfsmittel 105 dargestellt.

Der bereits erwähnte Palettierplatz 41 befindet sich nahe bei der Palettiervorrichtung 10. Das bedeutet, der Palettierplatz 41 befindet sich an einem Ort, wo die Palettiervorrichtung 10 zur Bildung des Lagenstapels 100 Artikellagen 15 auf dem Transporthilfsmittel 105 absetzen kann, welches sich auf dem Palettierplatz 41 befindet. Der Palettierplatz 41 befindet sich auf dem Fußboden 12 und ist in Längsrichtung X sowie in Querrichtung Y zu der Hubvorrichtung 20 versetzt angeordnet.

Der Palettierplatz 41 befindet sich vorliegend in Längsrichtung X versetzt zu der Zuführvorrichtung 110. In Querrichtung Y fluchtet der Palettierplatz 41 zumindest annähernd mit der Zuführvorrichtung 110. Eine Artikellage 15 wird also von der Zuführvorrichtung 110 bis zu dem Transporthilfsmittel 105 oder dem Lagenstapel 100 nur in Längsrichtung X sowie in Vertikalrichtung Z transportiert. Ein Transport der Artikellage 15 durch die Palettiervorrichtung 10 in Querrichtung Y ist somit nicht erforderlich.

An dem Palettierplatz 41 ist eine hier nicht dargestellte Einrichtung zum Laden eines Energiespeichers eines fahrerlosen Transportfahrzeugs 40 vorgesehen. Die besagte Einrichtung ist in Form eines Ladegeräts mit einer entsprechenden Energieübertragungseinrichtung ausgestaltet.

Es ist auch ein Warteplatz 43 vorgesehen, welcher sich vorzugsweise in unmittelbarer Nähe des Palettierplatzes 41 befindet. Der Warteplatz 43 befindet sich auf dem Fußboden 12 und ist vorliegend in Querrichtung Y zu dem Palettierplatz 41 versetzt angeordnet. In Längsrichtung X fluchtet der Palettierplatz 41 mit dem Warteplatz 43. Der Warteplatz 43 kann aber auch an anderen Stellen, beispielsweise in Längsrichtung X zu dem Palettierplatz 41 versetzt, angeordnet sein.

Auch an dem Palettierplatz 41 ist eine hier nicht dargestellte Einrichtung zum Laden eines Energiespeichers eines fahrerlosen Transportfahrzeugs 40 vorgesehen. Die besagte Einrichtung ist ebenfalls in Form eines Ladegeräts mit einer entsprechenden Energieübertragungseinrichtung ausgestaltet.

Beim Betrieb der Palettieranlage 5 wird ein fahrerloses Transportfahrzeug 40, bei Bedarf mit einem Transporthilfsmittel 105, zu dem Palettierplatz 41 bewegt. Auf dem Transporthilfsmittel 105 wird dann ein Lagenstapel 100 gebildet. Während der Bildung des Lagenstapels 100 verbleibt das fahrerlose Transportfahrzeug 40 auf dem Palettierplatz 41. Dabei wird der Energiespeicher des fahrerlosen Transportfahrzeugs 40 geladen. Ein weiteres fahrerloses Transportfahrzeug 40 mit einem weiteren Transporthilfsmittel 105 befindet sich währenddessen auf dem Warteplatz 43. Dabei wird auch der Energiespeicher des weiteren fahrerlosen Transportfahrzeugs 40 geladen.

Nachdem der Lagenstapel 100 auf dem Transporthilfsmittel 105 vollständig gebildet ist, wird das fahrerlose Transportfahrzeug 40 von dem Palettierplatz 41 weg und zu einem Entnahmeplatz 42 bewegt. An dem Entnahmeplatz 42 wird dann der Lagenstapel 100 gemeinsam mit dem Transporthilfsmittel 105 von dem fahrerlosen Transportfahrzeug 40 entnommen und zum weiteren Transport, beispielsweise mittels eines Lastkraftwagens, bereitgestellt.

Unmittelbar nachdem das fahrerlose Transportfahrzeug 40 den Palettierplatz 41 verlassen hat, wird das weitere fahrerlose Transportfahrzeug 40 mit dem weiteren Transporthilfsmittel 105 von dem Warteplatz 43 zu dem Palettierplatz 41 bewegt. Dann wird ein weiterer Lagenstapel 100 auf dem weiteren Transporthilfsmittel 105 gebildet.

Unmittelbar nachdem das weitere fahrerlose Transportfahrzeug 40 den Warteplatz 43 verlassen hat, wird ein weiteres fahrerloses Transportfahrzeug 40 mit einem weiteren Transporthilfsmittel 105 auf den Warteplatz 43 bewegt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 5: Palettieranlage
- 10: Palettiervorrichtung
- 12: Fußboden
- 15: Artikellage
- 20: Hubvorrichtung
- 40: fahrerloses Transportfahrzeug
- 41: Palettierplatz
- 42: Entnahmeplatz
- 43: Warteplatz
- 50: Absetzvorrichtung
- 80: Komprimiervorrichtung
- 100: Lagenstapel
- 105: Transporthilfsmittel
- 110: Zuführvorrichtung
- X: Längsrichtung
- Y: Querrichtung
- Z: Vertikalrichtung

## Patentansprüche

1. Verfahren zum Betrieb einer Palettieranlage (5), welche
eine Palettiervorrichtung (10) zur Bildung eines Lagenstapels (100) und mindestens ein fahrerloses Transportfahrzeug (40) zum Transportieren des Lagenstapels (100) umfasst,
wobei
das fahrerlose Transportfahrzeug (40) zu einem Palettierplatz (41) nahe der Palettiervorrichtung (10) bewegt wird, und
ein Lagenstapel (100) auf dem fahrerlosen Transportfahrzeug (40) gebildet wird,
**dadurch gekennzeichnet, dass**
das fahrerlose Transportfahrzeug (40) während der Bildung des Lagenstapels (100) auf dem Palettierplatz (41) verbleibt, wobei ein Energiespeicher während des Aufenthalts des fahrerlosen Transportfahrzeugs (40) auf dem Palettierplatz (41) geladen wird und das fahrerlose Transportfahrzeug (40) nach Bildung des Lagenstapels (100) von dem Palettierplatz (41) weg zu einem Entnahmeplatz (42) bewegt wird und an diesem der Lagenstapel (100) von dem fahrerlosen Transportfahrzeug (40) entnommen wird, oder mit einem Transporthilfsmittel (105) von dem fahrerlosen Transportfahrzeug (40) entnommen wird,
wobei
mehrere Lagenstapel (100) auf mehreren fahrerlosen Transportfahrzeugen (40) gleichzeitig gebildet werden, indem zunächst nur eine oder wenige Lagen auf einem ersten Transportfahrzeug (40) abgelegt werden, dann das erste Transportfahrzeug (40) in einen Warteplatz (43) bewegt wird, ein weiteres Transportfahrzeug (40) zum Palettierplatz (41) bewegt wird, eine oder wenige Lagen auf dem weiteren Fahrzeug (40) abgelegt werden, bis einer der Lagenstapel (100) eine gewünschte Höhe erreicht hat.

2. Verfahren nach Anspruch 1, **dadurch gekennzeichnet, dass**
auf dem fahrerlosen Transportfahrzeug (40) ein Transporthilfsmittel (105) angeordnet ist, auf welchem der Lagenstapel (100) gebildet wird.

3. Verfahren nach Anspruch 1, **dadurch gekennzeichnet, dass**
der Lagenstapel (100) unmittelbar auf dem fahrerlosen Transportfahrzeug (40) gebildet wird.

4. Verfahren nach einem der Ansprüche 1 bis 3, **dadurch gekennzeichnet, dass** nachdem das fahrerlose Transportfahrzeug (40) von dem Palettierplatz (41) weg bewegt wird,
ein weiteres fahrerloses Transportfahrzeug (40) von einem Warteplatz (43) zu dem Palettierplatz (41) bewegt wird, und
ein Lagenstapel (100) auf dem weiteren fahrerlosen Transportfahrzeug (40) gebildet wird.

5. Verfahren nach Anspruch 4, **dadurch gekennzeichnet, dass**
ein Energiespeicher des weiteren fahrerlosen Transportfahrzeugs (40) geladen wird, während das weitere fahrerlose Transportfahrzeug (40) sich auf dem Warteplatz (43) befindet.

6. Palettieranlage (5), umfassend
eine Palettiervorrichtung (10) zur Bildung eines Lagenstapels (100) und mindestens ein fahrerloses Transportfahrzeug (40) zum Transportieren des Lagenstapels (100), wobei
die Palettieranlage (5) zur Ausführung des Verfahrens nach einem der vorstehenden Ansprüche eingerichtet ist.

7. Palettieranlage (5) nach Anspruch 6, **dadurch gekennzeichnet, dass**
nahe der Palettiervorrichtung (10) mindestens ein Palettierplatz (41) vorgesehen ist, an welchem eine Einrichtung zum Laden eines Energiespeichers des fahrerlosen Transportfahrzeugs (40) vorgesehen ist.

8. Palettieranlage (5) nach einem der Ansprüche 6 bis 7, **dadurch gekennzeichnet, dass**
ein Warteplatz (43) vorgesehen ist, an welchem sich eine Einrichtung zum Laden eines Energiespeichers des fahrerlosen Transportfahrzeugs (40) befindet.
